# EUROPÄISCHE PATENTANMELDUNG

(11) **EP 3 260 279 A1**
(43) Veröffentlichungstag der Anmeldung: **27.12.2017**
(21) Anmeldenummer: 17174646.4
(22) Anmeldetag: 07.06.2017
(51) Int. Cl.: B29C 67/00, B33Y 70/00, C08F 285/00

(54) **VERWENDUNG VON KERN-SCHALE-(SCHALE-)PARTIKELN IM BINDER JETTING VERFAHREN**

(30) Priorität: 20.06.2016 EP 16175258
(71) Anmelder: Evonik Röhm GmbH, 64293 Darmstadt (DE)
(72) Erfinder: Haßkerl, Thomas, 61476 Kronberg (DE); Dössel, Lukas Friedrich, 64295 Darmstadt (DE)

(57) **Zusammenfassung**

Die vorliegende Erfindung betrifft das technische Gebiet des 3D-Drucks, insbesondere in Form des Binder Jetting Verfahrens, bei dem Partikel in einem Pulverbett mittels eines verdruckten Klebstoffs zu einem dreidimensionalen Objekt verklebt werden. Bei den Partikeln kann es sich dabei um anorganische Materialien, wie z.B. Sand oder ein Metallpulver, oder um polymere Partikel, wie zum Beispiel Polymethacrylate oder Polyamide, handeln. Polymethacrylate können dazu beispielsweise als Suspensionspolymerisate, so genannte Perlpolymerisate, vorliegen.

Die vorliegende Erfindung betrifft dabei insbesondere Pulverbettzusammensetzungen, enthaltend Kern-(Schale-)Schale-Partikel für den 3D-Druck, die sich vom Stand der Technik dadurch unterscheiden, dass die Kern-(Schale-)Schale-Partikel während des Druckvorgangs in Kontakt mit dem Bindemittel quellen können.

## Beschreibung

### Gebiet der Erfindung

Die vorliegende Erfindung betrifft das technische Gebiet des 3D-Drucks, insbesondere in Form des Binder Jetting Verfahrens, bei dem Partikel in einem Pulverbett mittels eines verdruckten Klebstoffs zu einem dreidimensionalen Objekt verklebt werden. Bei den Partikeln kann es sich dabei um anorganische Materialien, wie z.B. Sand oder ein Metallpulver, oder um polymere Partikel, wie zum Beispiel Polymethacrylate oder Polyamide, handeln. Polymethacrylate können dazu beispielsweise als Suspensionspolymerisate, so genannte Perlpolymerisate, vorliegen.

Die vorliegende Erfindung betrifft dabei insbesondere Pulverbettzusammensetzungen, enthaltend Kern-(Schale-)Schale-Partikel für den 3D-Druck, die sich vom Stand der Technik dadurch unterscheiden, dass die Kern-(Schale-)Schale-Partikel während des Druckvorgangs in Kontakt mit dem Bindemittel quellen können.

### Stand der Technik

Binder Jetting ist ein additiver Produktionsprozess, der auch unter dem das Verfahren gut beschreibenden Begriff 3D-Tintenstrahl-Pulverdruck bekannt ist. Bei diesem Verfahren wird ein flüssiges Bindemittel, beispielsweise mittels eines handelsüblichen Inkjet-Druckkopfs, auf eine Pulverschicht aufgetragen und damit gezielt ein Teil dieser Pulverschicht miteinander verbunden. Durch das im Wechsel mit diesem Auftragen erfolgende Aufbringen neuer Pulverschichten wird letztendlich ein dreidimensionales Produkt geformt. Insbesondere bewegt sich bei diesem Verfahren ein Tintenstrahldruckkopf selektiv über ein Pulverbett und druckt das flüssige Bindermaterial genau an den Stellen, die verfestigt werden sollen. Ein Beispiel für die Verfestigung ist die Reaktion zwischen flüssigen vinylischen Monomeren in der Tinte und Peroxiden, die im Pulver enthalten sind. Die Reaktion wird durch einen Katalysator z. B. auf der Basis eines Amins so stark beschleunigt, dass sie bei Raumtemperatur stattfindet. Der Prozess wird Lage für Lage wiederholt bis das Formteil fertig ist. Nach dem Beenden des Druckprozesses lässt sich das Formteil aus dem Pulverbett entnehmen und ggf. einer Nachbehandlung zuführen. Eine solche Nachbehandlung ist oft nötig, um die mechanische Stabilität des Endprodukts zu verbessern und besteht zum Beispiel aus einem Sintern, einem Infiltrieren, einer Bestrahlung oder dem Besprühen mit einem weiteren Bindemittel oder Härter. Ein solcher Nachbehandlungsschritt macht das Verfahren jedoch auf eine unerwünschte Art und Weise komplexer. Eine solche nachträgliche Bearbeitung ist weiterhin unerwünscht, da sie weiterhin aufgrund eines oft auftretenden Schrumpfs zu einer negativen Beeinflussung der Dimensionsstabilität führen kann.

Beim Binder Jetting können verschiedene Materialien als Bindemittel und als Pulvermaterial eingesetzt werden. Als Pulvermaterialien sind beispielsweise Polymerpartikel, Sand, Keramikpartikel oder Metallpulver mit einem jeweiligen Durchmesser zwischen 10 und wenigen 100 µm geeignet. Bei der Verwendung von Sand entfällt zumeist eine Nachbearbeitung des fertigen Gegenstandes. Bei anderen Materialien, wie zum Beispiel den Polymerpulvern wie u.a. PMMA, kann ein nachträgliches Härten, Sintern und/oder Infiltrieren des Gegenstandes nötig sein. Eine solche nachträgliche Bearbeitung ist jedoch eigentlich unerwünscht, da sie zeit- bzw. kostenaufwendig ist und aufgrund eines oft auftretenden Schrumpfs zu einer negativen Beeinflussung der Dimensionsstabilität führen kann.

Insbesondere kommen bis dato Polymerpulver auf Basis von Suspensionspolymerisaten zum Einsatz. Die Größe der Polymerpartikel liegt im Allgemeinen zwischen einigen zehn my und einigen Hundert my. Diese Partikel zeichnen sich durch gute Rieselfähigkeit aus, sie kleben nicht zusammen und lassen sich gut als Pulverbett auftragen. Setzt man Polymerpartikel ein, die einen Gehalt von Peroxiden aufweisen, so lässt sich leicht eine Reaktion mit dem (meth)acrylathaltigen Binder durchführen. Der Nachteil eines Pulverbetts, das aus oben genannten Partikeln besteht ist die Porosität der damit hergestellten Formkörper, da der flüssige Binder nur einen Teil der Hohlräume füllen kann.

Das Aufbringen des Bindemittels erfolgt in der Regel analog dem herkömmlichen zweidimensionalen Papierdruck. Beispiele für Bindemittelsysteme sind flüssige vinylische Monomere, die mittels in dem Pulvermaterial enthaltenen Peroxiden ausgehärtet werden. Alternativ oder zusätzlich enthält das Pulvermaterial einen die Aushärtung beschleunigenden bzw. erst bei der Umgebungstemperatur ermöglichenden Katalysator. Beispiele für einen solchen Katalysator für Acrylatharze bzw. -monomere mit Peroxiden als Initiator stellen Amine, insbesondere sekundäre Amine dar.

Gegenüber anderen 3D-Druckverfahren wie FDM oder SLS, die auf einem Aufschmelzen oder Verschweißen des das Produkt bildenden Materials basieren, hat das Binder Jetting große Vorteile. So ist dieses Verfahren von allen bekannten Verfahren am besten geeignet, farbige Objekte ohne nachträgliche Farbgebung direkt zu realisieren. Auch ist insbesondere dieses Verfahren dazu geeignet, besonders große Gegenstände herzustellen. So sind Produkte bis hin zu einer Zimmergröße beschrieben. Weiterhin sind andere Verfahren bezüglich des gesamten Druckvorgangs bis zum fertigen Objekt auch sehr zeitintensiv. Abgesehen von der eventuell nötigen Nachbearbeitung kann das Binder Jetting im Vergleich zu den anderen Verfahren sogar als besonders zeiteffizient betrachtet werden.
Darüber hinaus hat das Binder Jetting den großen Vorteil gegenüber anderen Verfahren, dass es ohne Hitzezufuhr erfolgt. Bei Verfahren, die mittels Aufschmelzen oder Verschweißen erfolgen, entstehen im Produkt durch diesen ungleichmäßigen Wärmeeintrag Spannungen, die zumeist in Folgeschritten wie einer thermischen Nachbehandlung, die weiteren Zeit- und Kostenaufwand bedeuten, wieder aufgelöst werden müssen.

Nachteilig am Binder Jetting ist die verfahrensbedingte Porosität des Produktes. So werden für mittels Binder-Jetting gedruckte Objekte nur Zugfestigkeiten erreicht, die ca. 20-mal geringer sind als die spritzgegossener Formteile aus einem vergleichbaren Material. Aufgrund dieses Nachteils wird das Binder Jetting Verfahren bis dato überwiegend zur Herstellung von Dekorstücken oder zur Abformung von Sandformen eingesetzt. Die Porosität ergibt sich vor allem aus der Tatsache, dass bei bekannten Druckverfahren nur ein Teil der Hohlräume zwischen den Partikeln mit dem Bindemittel aufgefüllt werden. Dies ergibt sich zwangsläufig aus der geringen Viskosität der aufgedruckten, flüssigen Bindemittel. Sollte mehr aufgetragen werden, so verläuft dies direkt vor und auch während des beginnenden Aushärtens in Nachbarpartikel bzw. Hohlräume zwischen den Partikeln (so genannte Zwickel). Dies wiederum führt zu einem ungenauen, unsauberen Druckbild bzw. zu einer geringen Oberflächengenauigkeit am fertigen Gegenstand.

Die Porosität wird verstärkt durch die Tatsache, dass bisher Polymerpulver auf Basis von Suspensionspolymerisaten zum Einsatz kommen. Die Größe der Polymerpartikel liegt im Allgemeinen zwischen einigen zehn und einigen Hundert Mikrometern. Diese Partikel zeichnen sich durch gute Rieselfähigkeit aus, sie kleben nicht zusammen und lassen sich gut als Pulverbett auftragen. Der Nachteil eines Pulverbetts, das ausschließlich aus Suspensionspolymerisaten gebildet wird besteht jedoch in der hohen Porosität der damit hergestellten Formkörper, die durch die relativ großen Zwickel in einem solchen Pulverbett entsteht.

J. Presser beschreibt in seiner Dissertation "Neue Komponenten für das generative Fertigungsverfahren des 3D-Drucks" (TU Darmstadt, 2012) die Verwendung von gefällten Emulsionspolymerisaten als Pulver für das Binder-Jetting-Verfahren. Diese Emulsionspolymerisate füllen dazu teilweise die Zwischenräume zwischen den eigentlichen Partikeln und führen damit zu einer Reduktion der Porosität. Die Aufarbeitung über Koagulation, Trocknung und Siebung führt aber zu nicht runden Sekundärpartikeln unregelmäßiger Größenverteilung. Weiterhin hat sich gezeigt, dass die so eingesetzten Emulsionspolymerisate die Schüttdichte kaum erhöhen und in Bezug auf die Stabilität des gedruckten Objekts keinen nennenswerten Einfluss haben.

### Aufgabe

Die der vorliegenden Erfindung zugrunde liegende Aufgabe war es, das Binder Jetting Verfahren dergestalt zu verbessern, dass Objekte mit einer im Vergleich zum Stand der Technik deutlich verbesserten mechanischen Qualität und gleichzeitig einem guten Erscheinungsbild der Oberfläche gedruckt werden können, ohne dass eine zeitaufwendige Nachbearbeitung des Produktes erfolgen muss.

Weiterhin war es Aufgabe, die mechanische Stabilität von Produkten eines Binder Jetting Verfahrens, insbesondere solche auf Basis eines Polymerpulvers, insbesondere eines PMMA-Pulvers, derart zu verbessern, dass diese als Funktionsteile eingesetzt werden können.

Insbesondere war es Aufgabe in diesem Zusammenhang, Formteile zu realisieren, die zumindest 30% des Zug-E-Moduls eines analogen spritzgegossenen Teils aufweisen. "Analog" bedeutet in diesem Fall beispielsweise, dass ein spritzgegossener PMMA-Formkörper mit einem Binder Jetting-Produkt auf Basis eines PMMA-Pulvers verglichen wird.

Weiterhin war es Aufgabe, die mechanische Stabilität von Produkten eines Binder Jetting Verfahrens, insbesondere solche auf Basis eines Polymerpulvers, insbesondere eines PMMA-Pulvers, derart zu verbessern, dass diese als Funktionsteile eingesetzt werden können.

Weitere nicht explizit genannte Aufgaben können sich aus der Beschreibung, den Beispielen oder den Ansprüchen der vorliegenden Anmeldung, bzw. aus dem Gesamtzusammenhang derselben ergeben.

### Lösung

Zur Lösung dieser Aufgaben werden erfindungsgemäß in einem Verfahren zur Herstellung von dreidimensionalen Objekten aus einem Pulverbett mittels eines Binder Jetting Verfahrens kleine Partikel, die die Hohlräume zwischen den Partikeln des Pulvers zumindest teilweise füllen und bei der Reaktion zwischen dem Binder und dem Peroxid einen festen Verbund mit erhöhter mechanischer Stabilität ergeben, eingesetzt. Diese erfindungsgemäß eingesetzten zweiten Partikel können z.B. durch Emulsionspolymerisation in wässriger Phase durch einen Stufenprozess hergestellt werden. Ein bevorzugtes Verfahren ist ein zwei- oder dreistufiger Emulsionspolymerisationsprozess bei dem im ersten Schritt ein Kern mit einer bestimmten Zusammensetzung und einer bestimmten Glastemperatur hergestellt wird. Im zweiten Schritt wird auf den Kern eine Schale aus demselben oder vorzugsweise einem anderen Polymer, in einer dritten Stufe optional eine zweite Schale auf diese erste Schale aufpolymerisiert. Die Zusammensetzungen zur Herstellung des Kerns bzw. der Schale(n) wird zweckmäßigerweise so gewählt, dass sie einen positiven Effekt auf die mechanischen Eigenschaften des nach dem Binder Jetting hergestellten Formköpers ausüben.

Erfindungsgemäß handelt es sich dabei um ein Verfahren zur Herstellung von dreidimensionalen Objekten aus einem Pulverbett mittels eines Binder Jetting Verfahrens, welches durch mehrfaches Wiederholen der folgenden Verfahrensschritte gekennzeichnet ist:
a) Aufbringen einer neuen Pulverschicht auf der Oberfläche des Pulverbetts und
b) selektives Auftragen eines Bindemittels und anschließendem oder gleichzeitigem Aushärten
dieses Bindemittels im Pulverbett.

Dabei weist erfindungsgemäß das Pulverbett mindestens zwei verschiedene Arten Partikel auf. Das erste Partikel hat dabei einen mittleren Durchmesser zwischen 10 und 500 µm, bevorzugt zwischen 30 und 110 µm und besonders bevorzugt zwischen 35 und 100 µm, was ungefähr den nach Stand der Technik bereits verwendeten Partikeln entspricht. Bevorzugt handelt es sich bei dem ersten Partikel um ein PMMA-Suspensionspolymerisat.

Erfindungsgemäß sind diese ersten Partikel jedoch im Pulverbett mit einer zweiten Art von Partikeln vermischt, wobei es sich bei diesem zweiten Partikel um ein Kern-Schale- oder einen Kern-Schale-Schale-Partikel mit einem mittleren Durchmesser zwischen 100 nm und 1200 nm handelt.

In einer besonderen Ausführungsform wird der Kern des Polymerisats, bei dem es sich dann um ein Kern-Schale-Partikel handelt, etwas härter als die Schale ausgeführt, wodurch die Wärmeformbeständigkeit des 3D-Formkörpers erhöht werden kann. Die Schale des Emulsionspolymerisats wird in dieser Ausführung etwas weicher als der Kern eingestellt, um eine gewisse Quellbarkeit durch den flüssigen Binder zu erhalten und dabei überraschend mit den Partikeln des Pulverbetts einen Verbund mit guter Kohäsion auszubilden. Die Einstellung der Weichheit bzw. der Härte von Schale und Kern kann z.B. durch die Wahl geeigneter Monomere oder Oligomere über die Glastemperatur deren Polymerisate erfolgen. Dabei muss die Glastemperatur so gewählt werden, dass einerseits kein Verbacken des Pulvers bei der Handhabung erfolgt und andererseits eine ausreichende Quellbarkeit durch den flüssigen Binder gegeben ist. Die Wahl der Glastemperatur kann z.B. durch die Kombination "harter" und "weicher" Monomere oder durch die Wahl eines einzigen Monomers erfolgen. Der Rahmen, in dem diese Auswahl erfolgen kann, ist dabei dem Fachmann auf Basis der genannten Eigenschaften einfach zu treffen. Insbesondere handelt es sich in einer solchen Ausführungsform bei dem zweiten Partikel um ein Kern-Schale-Partikel aufweisend einen Kern, der, gemessen mittels DSC, eine um mindestens 20 °C, bevorzugt mindestens 30 °C, besonders bevorzugt mindestens 40 °C höhere Glasüberganstemperatur aufweist als die Schale.

In einer anderen, gleichsam bevorzugten Ausführungsform wird die Schale eines Kern-Schale-Partikels, in der Regel in Form eines Emulsionspolymerisats, etwas härter als der Kern ausgeführt, wodurch die Klebrigkeit des Materials gesteuert und auf ein vertretbares Niveau herabgesetzt werden kann. Bei dieser Ausführung wird die Dicke der Schale so eingestellt, dass sie zum einen das Verkleben der Partikel bei der Handhabung verhindert und zum anderen ausreichend dünn ist, so dass überraschender Weise diese durch den flüssigen Binder penetriert werden kann und eine Anquellung des Partikels in einer angemessenen Zeit erlaubt. Zur Steuerung der Quellbarkeit kann die Außenschale besonders bevorzugt vernetzt werden. Der Vernetzungsgrad der Schale wird bevorzugt so gewählt, dass bei der zur Verfügung stehenden Zeitspanne im Druckprozess und der Wahl des flüssigen Binders eine ausreichende Zeit zum Anquellen resultiert. Der Rahmen, in dem diese Auswahl erfolgen kann, ist dabei gleichfalls dem Fachmann auf Basis der genannten Eigenschaften einfach zu treffen. Insbesondere handelt es sich in einer solchen Ausführungsform bei dem zweiten Partikel um ein Kern-Schale-Partikel aufweisend eine Schale, die, gemessen mittels DSC, eine um mindestens 20 °C, bevorzugt mindestens 30 °C, besonders bevorzugt mindestens 40 °C höhere Glasüberganstemperatur aufweist als der Kern.

In einer dritten, besonders bevorzugten Ausführungsform werden zweite Partikel mit einem Kern-Schale-Schale-Aufbau eingesetzt. Ein Beispiel für eine ganz besonders bevorzugte Ausführungsform dieser Variante sind Partikel, insbesondere Emulsionspolymerisate aus einem harten Kern, einer weichen ersten Schale und einer harten zweiten Schale. Bei diesem Partikelaufbau kann die Glastemperatur des Verbunds durch einen harten Kern hoch gehalten werden, während die weiche erste Schale für eine gute Quellbarkeit durch den flüssigen Binder sorgt. Die harte äußere Schale schützt vor dem Verkleben bei Handhabung und Anwendung, ist aber nur so dick, dass sie vom Binder penetriert werden kann. Insbesondere sind dabei zweite Partikel geeignet, bei denen die innere Schale, gemessen mittels DSC, eine um mindestens 20 °C, bevorzugt mindestens 30 °C, besonders bevorzugt mindestens 40 °C geringere Glasüberganstemperatur aufweist als der Kern und als die äußere Schale.

In einer vierten alternativen, gleichsam bevorzugten Ausführungsform der vorliegenden Erfindung werden ebenfalls Partikel mit einem Kern-Schale-Schale-Aufbau eingesetzt. Ein Beispiel für eine besonders bevorzugte Ausführungsform sind Partikel aus einem weichen Kern, einer harten ersten Schale und einer zweiten anquellbaren, ggf. etwas weicheren Schale. Diese Partikelarchitektur erlaubt überraschend die Erhöhung der Schlagzähigkeit des Verbunds, bedingt durch den gummielastischen weichen Kern während die erste harte Schale das Verbacken der Partikel verhindert. Die zweite, anquellbare und ggf. etwas weichere Schale wird so ausgelegt, dass sie das Anquellen erlaubt, aber ein vorzeitiges Verkleben bei der Handhabung und der Anwendung verhindert. Geeignete Formulierungen für die Außenschale umfassen Kombinationen von harten und weichen Monomeren, Molekulargewichtsreglern und Vernetzern. Durch die Wahl der Komponenten wird wie zuvor beschrieben eine Balance zwischen den Eigenschaften eingestellt, so dass eine ausreichende Quellbarkeit und ein verhindern des Verklebens gewährleistet ist. Bei dieser Ausführungsform können lösliche Polymerbestandteile in der Außenschale einen zusätzlichen positiven Effekt durch Verdickung des flüssigen Binders bewirken.

Unabhängig davon, welche dieser vier Ausführungsformen der Erfindung vom Fachmann gewählt wird, oder ob er sogar mehrere dieser Ausführungsformen miteinander kombiniert, erhält er folgende, überraschenden Effekte als Ergebnis:
- Erhöhung Dichte Pulverbett durch Mischung Emulsions- und Suspensionspolymerisate und damit eine geringere Porosität und bessere mechanische Stabilität des Endproduktes.
- Ein Anquellen der zweiten Partikel, insbesondere in Form von Emulsionspolymerisaten bei Druck in Abhängigkeit des Vernetzungsgrades und damit grundsätzlich ein sauberes, eine bessere Auflösung aufweisendes Druckbild.
- Ein Druckbild mit einem besseren, weil glatterem Erscheinungsbild der Oberfläche.

Optional können -je nach sonstiger Ausführungsform - eine Schale, die Schale oder beide Schalen auch so aufgebaut werden, dass oligomere oder polymere, bzw. niedermolekulare Bestandteile, die nicht kovalent mit dem zweiten Partikel verbunden sind und bei Kontakt des zweiten Partikels mit einem Lösungsmittel oder einem Monomer in diesem löslich sind, aus der Schale durch den flüssigen Binder herausgelöst werden und die Porosität der Schale erhöhen, so dass sie quellbar wird. Dies gelingt zum Beispiel durch den Einsatz von Molekulargewichtsreglern in der Schale. Bei der Kombination von Vernetzern und Molekulargewichtsreglern entsteht ein Teil nicht aufgepfropfter Polymerketten, die sich durch den flüssigen Binder ab- bzw. auflösen lassen. Während beispielsweise ein vergleichsweise hartes relativ kurzkettiges Polymer mit einer hohen Glastemperatur vor der Verbackung der Polymerpartikel schützt, kann nach Herauslösen dieser Komponente aus der Schale eine verbesserte Quellung der Schale erfolgen. Gleichzeitig verdickt das gelöste Polymer den flüssigen Binder und verhindert so wirksam die unerwünschte Anquellung tiefer liegender Schichten wodurch die Abbildegenauigkeit noch einmal zusätzlich unterstützt wird. Besonders bevorzugt sind die herauslösbaren Anteile Bestandteil der äußersten vorliegenden Schale des zweiten Partikels.

Bevorzugt werden die oligomeren oder polymeren Bestandteile durch den Einsatz von 0,1 bis 8 Gew%, besonders bevorzugt 1 bis 5 Gew% eines Reglers in der Monomermischung zur Herstellung des Kerns und/oder der Schale(n), bevorzugt zumindest einer Schale des zweiten Partikels gebildet. Ganz besonders bevorzugt wurde die äußerste vorliegende Schale des zweiten Partikels aus einer Zusammensetzung, enthaltend den Regler, hergestellt.

Bezüglich der Realisierung solcher löslichen Bestandteile kann im Allgemeinen folgendes festgestellt werden: Setzt man zum Beispiel mehr Regler ein, so entstehen kürzere Ketten und mehr lösliche Polymere. Setzt man weniger Regler ein, so entstehen längere Polymerketten und weniger lösliche Polymere. Setzt man wenig Vernetzer ein, so entstehen im Zusammenhang mit dem Reglergehalt mehr lösliche Polymere und umgekehrt entstehen weniger lösliche Polymere bei Einsatz einer höheren Vernetzerkonzentration.

Unabhängig von der weiteren Ausführungsform der vorliegenden Erfindung ist es vorteilhaft, wenn es sich bei dem Kern oder der Schale mit einer geringeren Glasübergangstemperatur um eine zu mindestens 60 Gew% aus Acrylaten hergestellte Phase handelt, welche eine mittels DSC gemessene Glasübergangstemperatur, die mindestens 40 °C unterhalb der mittels DSC bestimmten Glasübergangstemperatur des ersten Partikels liegt, aufweist.

Unabhängig davon, besonders bevorzugt aber zugleich zu der zuletzt genannten Ausführung der Erfindung, handelt es sich bevorzugt bei der Phase des Polymerpartikels mit einer höheren Glasübergangstemperatur um eine zu mindestens 60 Gew% aus MMA hergestellte Phase, welche eine mittels DSC bestimmte Glasübergangstemperatur größer 80 °C aufweist, handelt.

Unabhängig davon, besonders bevorzugt aber zugleich zu den beiden zuletzt genannten Ausführungen oder zu den anderen genannten Ausführungen der Erfindung, handelt es sich bevorzugt bei dem zweiten Partikel um einen solchen, in dem der Kern oder die Schale mit einer geringeren Glasübergangstemperatur eine Glasübergangstemperatur kleiner 40 °C aufweist, und dass der Kern und/oder die Schale mit einer höheren Glasübergangstemperatur eine Glasübergangstemperatur größer 80 °C aufweist.

Es ist optional auch möglich, dass das Pulverbett mindestens zwei verschiedene Partikel der beschriebenen zweiten Partikel enthält.

In einer ganz besonderen Ausführungsform der vorliegenden Erfindung handelt es sich bevorzugt bei dem ersten und oder dem zweiten Partikel um ein Polymerpartikel, der einen zur Aushärtung des Bindemittels geeigneten Initiator oder einen die Aushärtung beschleunigenden Katalysator oder Beschleuniger enthält. Bei den genannten Initiatoren kann es sich beispielsweise um dem Fachmann allgemein bekannte Peroxide oder Azoinitiatoren handeln. Bei den Beschleunigern handelt es sich beispielsweise um Verbindungen, die in Kombination mit einem Initiator, welcher wiederum für sich alleine eine relativ hohe Zerfallstemperatur aufweist, die Zerfallstemperatur dieses Initiators absenkt. Dies ermöglicht, dass schon bei der Umgebungstemperatur im Drucker oder bei einem Temperschritt bis 50 °C die Härtung gestartet wird. Im Falle eines hochzerfallenden Initiators wären dafür zum Beispiel sekundäre oder tertiäre, zumeist aromatische Amine geeignet. Genannte Katalysatoren können eine entsprechende oder ähnliche, aktivierende Wirkung haben. Die genaue Zusammensetzung des Initiatorsystems ist im Allgemeinen für den Fachmann jedoch einfach zu wählen.

Als Suspensionspolymerisate zur Herstellung der ersten Partikel dienen beispielsweise durch radikalische Polymerisation in Anwesenheit von Wasser hergestellte pulverförmige Materialien mit einem volumengemittelten Median des Partikeldurchmessers (d50) in dem weiter oben angegebenen Bereich. Besonders bevorzugt handelt es sich bei den Suspensionspolymerisaten um PMMA oder MMA-Copolymerisate. Dazu können die Comonomere beispielsweise aus der Gruppe der Acrylate, Methacrylate und Styrol oder Styrolderivate gewählt werden.

Bevorzugt enthält die Monomerphase zur Herstellung der Schale, bzw. der Schalen, besonders bevorzugt der äußersten vorliegenden Schale des zweiten Partikels mindestens einen Vernetzer. Insbesondere bevorzugt enthält diese Phase zwischen 0,1 und 10 Gew%, besonders bevorzugt zwischen 1 und 5 Gew% Vernetzer. Besonders bevorzugte Vernetzer sind di- oder tri-(Meth)acrylate.

Besonders bevorzugt liegt das Gewichtsverhältnis der ersten Partikel zu den zweiten Partikeln im Pulverbett zwischen 99 zu 1 und 9 zu 1, bevorzugt zwischen 40 zu 1 und 20 zu 1.

Alle Glasübergangstemperaturen werden erfindungsgemäß mittels DSC bestimmt. Der Fachmann weiß dazu, dass die DSC nur ausreichend aussagekräftig ist, wenn nach einem ersten Aufheizzyklus bis zu einer Temperatur, die minimal 25 °C oberhalb der höchsten Glasübergangs- bzw. Schmelztemperatur, dabei jedoch mindestens 20 °C unterhalb der tiefsten Zersetzungstemperatur eines Materials liegt, die Materialprobe für mindestens 2 min bei dieser Temperatur gehalten wird. Danach wird wieder auf eine Temperatur, die mindestens 20 °C unterhalb der tiefsten zu bestimmenden Glasübergangs- oder Schmelztemperatur liegt, abgekühlt, wobei die Abkühlrate maximal 20 °C / min, bevorzugt maximal 10 °C / min betragen sollte. Nach einer weiteren Wartezeit von wenigen Minuten erfolgt dann die eigentliche Messung, bei der mit einer Aufheizrate von in der Regel 10 °C / min oder weniger die Probe bis mindestens 20 °C über die höchste Schmelz- oder Glasübergangstemperatur erhitzt wird. Die jeweiligen höchsten und tiefsten Grenztemperaturen können in einfachen Vormessungen mit einer getrennten Probe grob vorbestimmt werden.

Die Partikelgrößen wurden gemäß DIN ISO 13321:2004-10, basierend auf der wortgleich übernommenen internationalen Norm ISO 13321:1996 mittels einem N5 Submicron Particle Size Analyzer der Firma Beckman Coulter, Inc. gemessen.

Die im Weiteren aufgeführten Detailbetrachtungen dienen dazu eine bevorzugte Ausführungsform bzgl. deren Ausführbarkeit zu verdeutlichen. Diese Betrachtungen sind jedoch nicht dazu aufgeführt, die vorliegende Erfindung in irgendeiner Form einzuschränken:

### Beispiele

Allgemeine, beispielhafte Beschreibung zur Herstellung der erfindungsgemäßen Emulsionspolymerisate:
Emulsionspolymerisation von Kern-Schale- und Kern-Schale-Schale-Emulsionspolymerisaten zur Herstellung von Polymerpartikeln für das Binder Jetting.

Emulsionspolymerisate mit einer mehrphasigen Kern/Schale/(Schale)-Architektur können als Polymerpartikel für das Binder Jetting eingesetzt werden. Sie sind beispielsweise erhältlich durch eine dreistufige Emulsionspolymerisation nach einem Verfahren bei welchem man
a) Wasser und Emulgator vorlegt,
b) 0 - 45 Gew.-Teile einer ersten Zusammensetzung, umfassend die Komponenten A), B), C) und D), zugibt und bis zu einem Umsatz von mindestens 85 % bezogen auf das Gesamtgewicht der Komponenten A), B), C) und D), polymerisiert,
c) 35,0 bis 80,0 Gew.-Teile einer zweiten Zusammensetzung, umfassend die Komponenten E), F), G), zugibt und bis zu einem Umsatz von mindestens 85 Gew.-%, bezogen auf das Gesamtgewicht der Komponenten E), F) und G) polymerisiert,
d) 15,0 bis 40,0 Gew.-Teile einer dritten Zusammensetzung, umfassend die Komponenten H), I), J) zugibt und bis zu einem Umsatz von mindestens 85 Gew.-% bezogen auf das Gesamtgewicht der Komponenten H), I) und J) polymerisiert,
e) wobei sich die angegebenen Gewichtsteile der Zusammensetzungen b), c) und d) zu 100 Gewichtsteilen addieren.

Im Schritt a) werden bevorzugt 90 bis 99,99 Gew.-Teile Wasser und 0,01 bis 10 Teile Emulgator vorgelegt, wobei sich die angegebenen Gewichtsteile zu 100 Gewichtsteilen addieren.
Die Polymerisationen b), c) und d) können thermisch bei einer Temperatur zwischen 60 und 90°C, bevorzugt 70 bis 85°C und vorzugsweise 75 bis 85°C durchgeführt oder durch ein Redox-Initiatorsystem initiiert werden.

Die Initiierung kann mit den für die Emulsionspolymerisation gebräuchlichen Initiatoren erfolgen. Geeignete organische Initiatoren sind beispielsweise Hydroperoxide, wie t-Butyl-Hydroperoxid oder Cumolhydroperoxid. Geeignete anorganische Initiatoren sind Wasserstoffperoxid sowie Alkalimetall- und die Ammoniumsalze der Peroxodischwefelsäure, insbesondere Kalium- und Natriumperoxodisulfat. Die genannten Initiatoren können sowohl einzeln als auch in Mischung verwendet werden. Sie werden vorzugsweise in einer Menge von 0,05 bis 3,0 Gew.-Teilen bezogen auf das Gesamtgewicht der Monomere der jeweiligen Stufe eingesetzt.
Die Stabilisierung des Ansatzes kann mittels Emulgatoren und/oder Schutzkolloiden erfolgen. Bevorzugt wird die Stabilisierung durch Emulgatoren, um eine niedrige Dispersionsviskosität zu erhalten. Die Gesamtmenge an Emulgator beträgt vorzugsweise 0,1 bis 5,0 Gew.-Teile , insbesondere 0,5 bis 3,0 Gew.-Teile bezogen auf das Gesamtgewicht der Monomere A) bis J).

Besonders geeignete Emulgatoren sind anionische und/oder nichtionische Emulgatoren oder deren Mischungen, insbesondere Alkylsulfate, Alkyl- und Alkylarylethersulfate, Sulfonate, vorzugsweise Alkylsulfonate, Ester und Halbester der Sulfobernsteinsäure, Phosphorsäureteilester und deren Salze, Alkylpolyglykolether, Alkylarylpolyglykolether und Ethylenoxid-Propylenoxidcopolymere. Der Initiator kann vorgelegt oder zudosiert werden. Weiterhin ist es auch möglich, einen Teil des Initiators vorzulegen und den Rest zu dosieren. Initiator und Emulgator können getrennt oder als Gemisch zudosiert werden. Vorzugsweise wird mit der Dosierung 15 bis 35 min nach Beginn der Polymerisation begonnen.

Weiterhin ist es besonders vorteilhaft, dass die Vorlage ein sogenanntes Saatlatex mit einer Teilchengröße zwischen 10 und 40 nm, gemessen im Laserbeugungsverfahren, wie sie z.B. von den Firmen Beckman Coulter oder Malvern angeboten werden, enthält.
Bevorzugt wird die Polymerisation durch Erhitzen des Ansatzes und Zudosieren des Initiators gestartet. Die Dosierungen von Emulgator und Monomeren können getrennt oder zusammen erfolgen.

Zu dem Saatlatex werden die Monomerbestandteile des eigentlichen Kerns, d.h. die erste Zusammensetzung unter solchen Bedingungen zugegeben, dass die Bildung neuer Teilchen vermieden wird, wodurch das Schalenmaterial auf dem bestehenden Kern aufwächst. Diese Vorgehensweise gilt sinngemäß für alle Stufen.
Die Einstellung der Kettenlänge insbesondere der Polymerisate der zweiten Schale (dritte Zusammensetzung) kann unter Verwendung von Molekulargewichtsreglern, bevorzugt Mercaptanen erfolgen.

Das erfindungsgemäße Kern-Schale-(Schale)-Teilchen kann aus der Dispersion beispielsweise durch Sprühtrocken, Gefrierkoagulation, Ausfällen durch Elektrolytzusatz oder durch mechanische oder thermische Belastung gewonnen werden.

Unter dem im Folgenden verwendeten Begriff styrolische Monomere sind Derivate des Styrols zu verstehen. Die geeigneten Derivate umfassen solche, die Substituenten am Phenylkern des Styrols aufweisen und unsubstituiertes Styrol.

Die erste Zusammensetzung gemäß b) umfasst
A) 50 bis 99,9 Gew.-Teile Alkylmethacrylate
B) 0 bis 40 Gew.-Teile Alkylacrylate
C) 0 bis 10 Gew.-Teile vernetzende Monomere
D) 0 bis 8 Gew.-Teile styrolische Monomere

Die zweite Zusammensetzung gemäß c) umfasst
E) 80 bis 100 Teile monofunktionelle (Meth)acrylate
F) 0,05 bis 5 % vernetzende Monomere
G) 0 bis 25 % styrolische Monomere
Die Monomerauswahl der Monomere E), F), G) erfolgt dermaßen, dass die Glastemperatur des resultierenden Copolymeren vorzugsweise kleiner als 10°C, insbesondere zwischen 0 und -75°C, gemessen durch DSC (Differential Scanning Calorimetry) liegt.
Die dritte Zusammensetzung d) für die Kern-Schale-Schale-Teilchen umfasst
H) 50 bis 100 Gew.-Teile Alkylmethacrylate
I) 0 bis 40 Gew.-Teile Alkylacrylate
J) 0 bis 10 Gew.-Teile styrolische Monomere
K) 0 bis 5 % vernetzende Monomere

### Spezifische Beispiele:

### Kern-Schale-Schale-Teilchen I.

### Beispiel 1:

### Herstellung des Saatlatex

Ein Saatlatex wurde mittels Emulsionspolymerisation einer Monomerzusammensetzung enthaltend 98 Gew.-% Ethylacrylat und 2 Gew.-% Allylmethacrylat hergestellt. Diese im Durchmesser ca. 20 nm großen Partikel lagen zu ca. 10 Gew.-% in Wasser vor. Durch Aufpolymerisieren einer Schale auf den Saatlatex lassen sich Saatlatices mit bis zu 300 nm großen Teilchen herstellen. Durch Verwendung großer Partikel im Saatlatex lassen sich im dreistufigen Prozess sehr große Partikeln bis zu 1 µm Durchmesser herstellen.

### Herstellung der Kern-Schale-Schale-Teilchen

Alle im Folgenden beschriebenen Kern-Schale-Schale-Teilchen wurden mittels Emulsionspolymerisation gemäß der nachfolgenden Herstellungsvorschrift A (erfindungsgemäße Beispiele B1, B2, B3, B4 sowie B5) hergestellt. Dabei wurden die in Tabelle 1 angegebenen Emulsionen (i) bis (iii) eingesetzt. Ergänzend wird das Beispiel 6, Verfahren B als weitere Variante mit separater Beschreibung angegeben.

### Beispiele B1, B2, B3, B4 und B5

Herstellung der Kern-Schale-Schale-Teilchen durch Herstellungsverfahren A

Bei 83°C (Kessel-Innentemperatur) wurden unter Rühren 1,711 kg Wasser in einem Polymerisationskessel vorgelegt. Es erfolgte eine Zugabe von 1,37 g Natriumcarbonat und Saatlatex. Anschließend wurde die Emulsion (i) über 1 h zudosiert. 10 min nach Zulaufende der Emulsion (i) wurde die Emulsion (ii) über einen Zeitraum von ca. 2 h zudosiert. Anschließend wurde ca. 60 min nach Zulaufende der Emulsion (ii) Emulsion (iii) über einen Zeitraum von ca. 1 h zudosiert. 30 min nach Zulaufende der Emulsion (iii) wurde auf 30°C abgekühlt.
Zur Separation der Kern-Schale-Schale-Teilchen wurde die Dispersion über 2 Tage bei -20°C eingefroren, danach wieder aufgetaut und die koagulierte Dispersion über ein Filtergewebe abgetrennt. Die Trocknung des Feststoffs erfolgte bei 50°C im Trockenschrank (Dauer: ca. 3 Tage). Die Teilchengröße der Kern-Schale-Schale-Teilchen (s. Tabelle 2) wurde mit Hilfe eines Nano-Sizer© N5 von Coulter bestimmt, wobei die Partikel in Dispersion vermessen wurden.

### Beispiel B6, Verfahren B

Herstellung der Kern-Schale-Schale-Teilchen durch Herstellungsverfahren B
Bei 52°C (Kessel-Innentemperatur) wurden unter Rühren 1,711 kg Wasser in einem Polymerisationskessel vorgelegt und 0,10 g Essigsäure, 0,0034 g Eisen(II)sulfat, 0,69 g Natriumdisulfit sowie der Saatlatex zugegeben. Anschließend wurde die Emulsion (i) über 1,5 h zudosiert. 10 min nach Zulaufende der Emulsion (i) wurde 7,46 g Natriumdisulfit gelöst in 100 g Wasser zugegeben und die Emulsion (ii) über einen Zeitraum von ca. 2,5 h zudosiert. Anschließend wurden ca. 30 min nach Zulaufende der Emulsion (ii) 0,62 g Natriumdisulfit gelöst in 50 g Wasser zugegeben und die Emulsion (iii) wurde über einen Zeitraum von ca. 1,5 h zudosiert. 30 min nach Zulaufende der Emulsion (iii) wurde auf 30°C abgekühlt.
Zur Separation der Kern-Schale-Schale-Teilchen wurde die Dispersion über 2 Tage bei -20°C eingefroren, danach wieder aufgetaut und die koagulierte Dispersion über ein Filtergewebe abgetrennt. Die Trocknung des Feststoffs erfolgte bei 50°C im Trockenschrank (Dauer: ca. 3 Tage). Die Teilchengröße der Kern-Schale-Schale-Teilchen (s. Tabelle 2) wurde mit Hilfe eines Nano-Sizer© N5 von Coulter bestimmt, wobei die Partikel in Dispersion vermessen wurden.

**Tabelle 1: Zusammenfassung der einzelnen Emulsionen (alle Angaben in [g])**

| | **B1** | **B2** | **B3** | **B4** | **B5** | **B6** |
|---|---|---|---|---|---|---|
| **Saatlatex** | **93,00** | **58,00** | **28,00** | **20,00** | **16,00** | **5,00** |
| | | | | | | |
| **Emulsion (i)** | | | | | | |
| **Wasser** | **878,70** | **878,70** | **878,70** | **878,70** | **878,70** | **732,69** |
| **Natriumpersulfat** | **0,70** | **0,70** | **0,70** | **0,70** | **0,70** | **0,51** |
| **Aerosol OT75** | **5,60** | **5,60** | **5,60** | **5,60** | **5,60** | **4,67** |
| **Methylmethacrylat** | **1071,62** | **1071,62** | **1071,62** | **1071,62** | **1071,62** | **703,47** |
| **Ethylacrylat** | **44,74** | **44,74** | **44,74** | **44,74** | **44,74** | **29,40** |
| **Allylmethacrylat** | **2,24** | **2,24** | **2,24** | **2,24** | **2,24** | **2,21** |
| | | | | | | |
| **Emulsion (ii)** | | | | | | |
| **Wasser** | **606,90** | **606,90** | **606,90** | **606,90** | **606,90** | **628,65** |
| **Natriumpersulfat** | **1,58** | **1,58** | **1,58** | **1,58** | **1,58** | **1,44** |
| **Aerosol OT75** | **7,20** | **7,20** | **7,20** | **7,20** | **7,20** | **7,46** |
| **Butylacrylat** | **1160,63** | **1160,63** | **1160,63** | **1160,63** | **1160,63** | **1219,72** |
| **Styrol** | **256,00** | **256,00** | **256,00** | **256,00** | **256,00** | **262,87** |
| **Allylmethacrylat** | **21,57** | **21,57** | **21,57** | **21,57** | **21,57** | **19,53** |
| | | | | | | |
| **Emulsion (iii)** | | | | | | |
| **Wasser** | **404,30** | **404,30** | **404,30** | **404,30** | **404,30** | **381,56** |
| **Natriumpersulfat** | **0,70** | **0,70** | **0,70** | **0,70** | **0,70** | **0,44** |
| **Aerosol OT75** | **1,08** | **1,08** | **1,08** | **1,08** | **1,08** | **1,34** |
| **Methylmethacrylat** | **614,27** | **614,27** | **614,27** | **614,27** | **614,27** | **920,45** |
| **Ethylacrylat** | **24,93** | **24,93** | **24,93** | **24,93** | **24,93** | **38,35** |

**Tabelle 2: Teilchengrößen der Polymerpartikel**

| **Kern-Schale-Schale-Teilchen** | **B1** | **B2** | **B3** | **B4** | **B6** |
|---|---|---|---|---|---|
| **Teilchenradius [nm]** | **72** | **88** | **101** | **116** | **165** |

Durch Verwendung der oben genannten großen Saatlatices lassen sich größere Partikel bis zu 1000 nm Durchmesser in analoger Weise herstellen.

## Patentansprüche

1. Verfahren zur Herstellung von dreidimensionalen Objekten aus einem Pulverbett mittels eines Binder Jetting Verfahrens durch mehrfaches Wiederholen der Verfahrensschritte a) Aufbringen einer neuen Pulverschicht auf der Oberfläche des Pulverbetts und b) selektives Auftragen eines Bindemittels und anschließendem oder gleichzeitigem Aushärten dieses Bindemittels im Pulverbett, wobei das Pulverbett mindestens zwei verschiedene Arten Partikel aufweist, wobei das erste Partikel einen mittleren Durchmesser zwischen 10 und 500 µm aufweist, **dadurch gekennzeichnet, dass** es sich bei dem zweiten Partikel um ein Kern-Schale- oder ein Kern-Schale-Schale-Partikel mit einem mittleren Durchmesser zwischen 100 nm und 1200 nm handelt.

2. Verfahren gemäß Anspruch 1, **dadurch gekennzeichnet, dass** es sich bei dem ersten Partikel um ein PMMA-Suspensionpolymerisat mit einem mittleren Durchmesser zwischen 30 und 110 µm handelt.

3. Verfahren gemäß Anspruch 1 oder 2, **dadurch gekennzeichnet, dass** es sich bei dem zweiten Partikel um ein Emulsionspolymerisat, aufweisend einen Kern mit zwei darauf aufgepfropften Schalen, handelt.

4. Verfahren gemäß Anspruch 1 oder 2, **dadurch gekennzeichnet, dass** es sich bei dem zweiten Partikel um ein Kern-Schale-Partikel handelt, wobei der Kern, gemessen mittels DSC, eine um mindestens 20 °C höhere Glasüberganstemperatur aufweist als die Schale.

5. Verfahren gemäß Anspruch 1 oder 2, **dadurch gekennzeichnet, dass** es sich bei dem zweiten Partikel um ein Kern-Schale-Partikel handelt, wobei die Schale, gemessen mittels DSC, eine um mindestens 20 °C höhere Glasübergangstemperatur aufweist als der Kern.

6. Verfahren gemäß Anspruch 3, **dadurch gekennzeichnet, dass** die innere Schale, gemessen mittels DSC, eine um mindestens 20 °C geringere Glasüberganstemperatur aufweist als der Kern und als die äußere Schale.

7. Verfahren gemäß mindestens einem der Ansprüche 1 bis 6, **dadurch gekennzeichnet, dass** die äußerste vorliegende Schale des zweiten Partikels oligomere oder polymere Bestandteile, die nicht kovalent mit dem zweiten Partikel verbunden sind und bei Kontakt des zweiten Partikels mit einem Lösungsmittel oder einem Monomer in diesem löslich sind, enthält.

8. Verfahren gemäß Anspruch 7, **dadurch gekennzeichnet, dass** die oligomeren oder polymeren Bestandteile durch den Einsatz von 0,1 bis 8 Gew% eines Reglers in der Monomermischung zur Herstellung zumindest einer Schale des zweiten Partikels gebildet wurden.

9. Verfahren gemäß mindestens einem der Ansprüche 1 bis 8, **dadurch gekennzeichnet, dass** die äußerste vorliegende Schale des zweiten Partikels aus einer Zusammensetzung, enthaltend zwischen 0,1 und 8 Gew% eines Reglers hergestellt wurde.

10. Verfahren gemäß mindestens einem der Ansprüche 4 bis 9, **dadurch gekennzeichnet, dass** es sich bei dem Kern oder der Schale mit einer geringeren Glasübergangstemperatur um eine zu mindestens 60 Gew% aus Acrylaten hergestellte Phase handelt, welche eine mittels DSC gemessene Glasübergangstemperatur, die mindestens 40 °C unterhalb der mittels DSC bestimmten Glasübergangstemperatur des ersten Partikels liegt, aufweist.

11. Verfahren gemäß mindestens einem der Ansprüche 4 bis 10, **dadurch gekennzeichnet, dass** es sich bei der Phase des Polymerpartikels mit einer höheren Glasübergangstemperatur um eine zu mindestens 60 Gew% aus MMA hergestellte Phase, welche eine mittels DSC bestimmte Glasübergangstemperatur größer 80 °C aufweist, handelt.

12. Verfahren gemäß mindestens einem der Ansprüche 1 bis 12, **dadurch gekennzeichnet, dass** es sich bei dem ersten und/oder dem zweiten Partikel um ein Polymerpartikel, enthaltend einen zur Aushärtung des Bindemittels geeigneten Initiator oder einen die Aushärtung beschleunigenden Katalysator oder Beschleuniger, handelt.

13. Verfahren gemäß mindestens einem der Ansprüche 1 bis 12, **dadurch gekennzeichnet, dass** das Gewichtsverhältnis der ersten Partikel zu den zweiten Partikeln im Pulverbett zwischen 99 zu 1 und 9 zu 1 liegt.

14. Verfahren gemäß mindestens einem der Ansprüche 1 bis 13, **dadurch gekennzeichnet, dass** das Pulverbett mindestens zwei verschiedene Partikel gemäß der Ansprüche 3 bis 11 enthält.

15. Verfahren gemäß mindestens einem der Ansprüche 3 bis 14, **dadurch gekennzeichnet, dass** der Kern oder Schale mit einer geringeren Glasübergangstemperatur eine Glasübergangstemperatur kleiner 40 °C aufweist, und dass der Kern und/oder die Schale mit einer höheren Glasübergangstemperatur eine Glasübergangstemperatur größer 80 °C aufweist.
